# EUROPEAN PATENT SPECIFICATION

(11) **EP 2 581 741 B1**
(45) Date of publication and mention of the grant of the patent: **18.09.2019**
(21) Application number: 11184943.6
(22) Date of filing: 12.10.2011
(51) Int. Cl.: G01N 30/86, G01N 30/32, G01N 30/34

(54) **Method transfer by freezing an initially non-controlled parameter**
Methodentransfer mittels Einfrieren eines anfänglich nicht kontrollierten Parameters
Transfert de méthodes en gelant un paramètre initialement non contrôlé

(43) Date of publication of application: 17.04.2013
(73) Proprietor: Agilent Technologies, Inc., Santa Clara, California 95051 (US)
(72) Inventor: Witt, Klaus, 76337 Waldbronn (DE); Choikhet, Konstantin, 76337 Waldbronn (DE)
(74) Representative: Dilg, Haeusler, Schindelmann Patentanwaltsgesellschaft mbH

(56) References cited:
- EP-A1- 0 872 732
- EP-A1- 2 124 047
- EP-A2- 1 041 382
- WO-A1-96/08718
- WO-A1-2011/108401
- US-A- 5 670 707
- US-B1- 6 634 211
- GE Healthcare: "ÄKTAexplorer chromatography systems", Data File 18-1124-09 AG Chromatography systems , 5 November 2007 (2007-11-05), pages 1-11, XP002671460, Retrieved from the Internet: URL:http://www.gelifesciences.com/aptrix/u pp00919.nsf/Content/7338A0A4BC4686FDC12576 28001CD50D/$file/18112409AG.pdf [retrieved on 2012-03-14]
- SONG J Z ET AL: "Rapid optimization of dual-mode gradient high performance liquid chromatographic separation of Radix et Rhizoma Salviae Miltiorrhizae by response surface methodology", JOURNAL OF CHROMATOGRAPHY, ELSEVIER SCIENCE PUBLISHERS B.V, NL, vol. 1216, no. 42, 16 October 2009 (2009-10-16), pages 7007-7012, XP026640841, ISSN: 0021-9673, DOI: 10.1016/J.CHROMA.2009.08.059 [retrieved on 2009-08-27]
- POOLE C F ET AL: "Foundations of retention in partition chromatography", JOURNAL OF CHROMATOGRAPHY, ELSEVIER SCIENCE PUBLISHERS B.V, NL, vol. 1216, no. 10, 6 March 2009 (2009-03-06), pages 1530-1550, XP025940486, ISSN: 0021-9673, DOI: 10.1016/J.CHROMA.2008.10.092 [retrieved on 2008-10-31]

## Description

### BACKGROUND ART

The present invention relates to methods for operating sample separation systems and relates to the development of such methods.

In liquid chromatography, a fluidic sample and an eluent (liquid mobile phase) may be pumped through conduits and a column in which separation of sample components takes place. The column may comprise a material which is capable of separating different components of the fluidic analyte. Such a packing material, so-called beads which may comprise silica gel, may be filled into a column tube which may be connected to other elements (like a control unit, containers including sample and/or buffers) by conduits. US 2003/116195 A1 and WO 2007/092798 A2 are examples for chromatographic separating systems.

The composition of the mobile phase can be adjusted by composing the mobile phase from different fluidic components with variable contributions, so called gradient mode. HPLC systems often are operated in such a gradient mode, wherein for instance for reversed phase chromatography the organic content is ramped over time, or for ion exchange chromatography the salt content is ramped over time. Especially in proteomics most applications are based on water/acetonitrile gradients. An analytical protocol for running a defined analytical process is called the "method". In the analytical protocol - or method - for a gradient separation, the gradient is usually defined as a composition change program over time, while the flow rate is kept constant over the major part of such a method. The so-called retention time is a time required for transport of a certain fraction of a fluidic sample to be separated throughout a separation column during a gradient run.

Sometimes, a method is transformed into another method. For instance, WO 2011/108401 discloses a high-speed liquid chromatography device with which it is possible to achieve a separation effect similar to that of constant velocity gradient elution, and with which it is possible to reduce measurement time. When using a data processing device to convert a constant flow rate gradient program into a constant pressure gradient program on the basis of previously recorded pressure trace run with constant flow, whereas a pressure value trace file stored in a pressure trace storage unit is selected and displayed on a display, and pressure values are set. A constant velocity gradient program stored on a constant velocity gradient program storage unit is converted into a constant pressure gradient program by means of a constant pressure gradient program conversion unit, and numbers are displayed by the converted constant pressure gradient program. Liquid supply units of a liquid supply pump are controlled by a flow rate instruction unit and a mix ratio instruction unit in accordance with the constant pressure gradient program displayed on the screen.

Alternatives to the concept of retention times are known such as the concept of retention volumes. Particularly, WO 2009/062538 A1 discloses in a high performance liquid chromatography system, wherein a mobile phase is driven through a stationary phase for separating components of a fluidic sample comprised in the mobile phase, a flow rate of the mobile phase is controlled in dependence on a variation in a control value in the system. WO 2009/062538 A1 comprises determining (for instance by an adequate analysis unit, which considers predicted, measured or elsewise derived flow information) a value of a retention volume representing such volume of the mobile phase required to elute a respective compound of the fluidic sample at least through the separating device. The mobile phase drive is then operated (for instance by an adequate control unit) based on the determined value of the retention volume. This makes use of the concept of retention volumes, rather than retention times.

However, not all fluidic members (such as simple but cost-efficient pumps) support sophisticated operation modes of a sample separation system such as a chromatographic method using the concept of retention volume rather than retention time.

### DISCLOSURE

It is an object of the invention to enable a flexible operation of a liquid chromatography device. The object is solved by the independent claims. Further embodiments are shown by the dependent claims.

According to an exemplary embodiment of the present invention, a process for developing a method of operating a liquid chromatography device for separating a fluidic sample using a mobile phase is provided, wherein the process comprises executing a scouting method for separating a fluidic sample by controlling a set of controlled parameters (wherein the set of controlled parameters may be exactly one controlled parameter or a plurality of controlled parameters) during the execution of the scouting method, wherein non-controlled parameters are allowed to freely vary during the execution of the scouting method, registering a course of at least one non-controlled parameter during the execution of the scouting method, the time dependence or development of the value over time of the non-controlled parameter being detected and stored, defining a modified method for separating a fluidic sample derived from the scouting method by changing the set of controlled parameters, i.e. declaring (for instance defining) the previously registered non-controlled parameter as a new controlled parameter in the modified method (particularly redefining an originally controlled parameter as, in the context of the modified method, a now non-controlled parameter), and executing the modified method under application of the registered course of the parameter as execution program for this parameter in the role of new controlled parameter.

According to still another exemplary embodiment of the present invention, an apparatus for developing a method of operating a liquid chromatography device for separating a fluidic sample using a mobile phase is provided, wherein the apparatus comprises an execution unit configured for executing a scouting method for separating a fluidic sample by controlling a set of controlled parameters during the execution of the scouting method, wherein non-controlled parameters are allowed to freely vary during the execution of the scouting method, a registering unit configured for registering a course of at least one non-controlled parameter during the execution of the scouting method, the time dependence or development of the value over time of the non-controlled parameter being detected and stored, a defining unit configured for defining a modified method for separating a fluidic sample derived from the scouting method by changing the set of controlled parameters, declaring the previously registered non-controlled parameter as a new controlled parameter in the modified method and optionally excluding an originally controlled parameter from the set of controlled parameters, and a further execution unit (wherein the execution unit and the further execution unit may be either a common entity such as one and the same processor, or may be separate entities) configured for executing the modified method under application of the registered course of the parameter as execution program for this parameter in the role of new controlled parameter.

A sample separation apparatus for separating components of a fluidic sample in a mobile phase may comprise a mobile phase drive, particularly a pumping system, configured to drive the mobile phase through the sample separation apparatus, a separation unit, particularly a chromatographic column, configured for separating components of the fluidic sample in the mobile phase, and a method execution unit configured for executing a method of operating the sample separation apparatus for separating the fluidic sample, wherein the method results from a process having the above mentioned features.

A software program or product may be provided, preferably stored on a data carrier, for controlling or executing the process having the above mentioned features, when run on a data processing system such as a computer.

An embedded software program or a user interface may be provided which enables controlling or executing the process having the above mentioned features either directly on a chromatographic apparatus or using a hardware controller or control interface such as a hand-held controller or hand-held computer or similar device.

Software programs or routines can be preferably applied in the context of method transfer and method development. The method transfer and method development scheme according to an embodiment of the invention can be performed or assisted by a computer program, i.e. by software, or by using one or more special electronic optimization circuits, i.e. in hardware, or in hybrid form, i.e. by means of software components and hardware components.

In the context of this application, the term "fluidic sample" may particularly denote any liquid and/or gaseous medium, optionally including also solid particles, which is to be analyzed. Such a fluidic sample may comprise a plurality of fractions of molecules or particles which shall be separated, for instance biomolecules such as proteins.

In the context of this application, the term "sample separation apparatus" may particularly denote any apparatus which is capable of separating different fractions of a fluidic sample by applying a certain separation technique. Particularly, a separation unit may be provided in such a sample separation apparatus. This means that the sample can be separated in accordance with a certain separation criterion.

The term "separation unit" may particularly denote a fluidic member through which a fluidic sample is transferred and which is configured so that, upon conducting the fluidic sample through the separation unit, the fluidic sample will be separated into different groups of molecules or particles (called fractions or sub-fractions, respectively). An example for a separation unit is a liquid chromatography column which is capable of trapping and selectively releasing different fractions of the fluidic sample.

In the context of this application, the term "sample separation method" may be defined by a specification of the sample separation involving a set of parameters" and may particularly denote a workflow, an algorithm or a set of operation parameters defining as to how a sample separation apparatus is to be operated, controlled or run. Thus, the sample separation method may include a complete set of data which, when provided to the sample separation apparatus, defines a dedicated operation of this sample separation apparatus. For example, the sample separation method may define a procedure of separating different components of fluids by the liquid chromatography device or a procedure requiring official approval (for instance an approval procedure before the FDA, Food and Drug Administration, in the United States), a procedure of flushing the device (for example an algorithm according to which a rinse solution is supplied for removing traces of fluids from a previous investigation, thereby suppressing undesired crosstalk or contamination), a selection of a solvent for the liquid chromatography device (for instance selecting multiple constituents of such a solvent, their relative concentrations, etc.), a procedure of applying a concentration gradient to the liquid chromatography device (for example to perform a liquid chromatography analysis using a chromatographic column) and/or a selection of an operation temperature (and/or other physical parameters such as pressure) for the liquid chromatography device. The operation mode may define a sequence of instructions providable to the liquid chromatography device for operating the liquid chromatography device. Such a set of instructions may be sufficient for running the fluidic device in accordance with a desired scheme.

In the context of this application, the term "scouting method" may particularly denote a method which is used as a start or basis for developing another modified method, i.e. may serve as a starting point for a method transfer. Executing the scouting method on a sample separation apparatus may mean that the set of instructions is applied so as to perform a real sample separation procedure based on this method as a set of instructions and using the sample separation apparatus as hardware.

In the context of this application, the term "parameter" may particularly denote any physical variable having an impact on a chromatographic sample separation procedure. Examples are pressure, flow rate, temperature, composition of a mobile phase and/or a fluidic sample and/or of a fluidic member of the liquid chromatography device.

In the context of this application, the term "controlled parameter" may particularly denote at least one parameter which is actively controlled, regulated, steered or adjusted during the execution of the scouting method so that the parameter value of the controlled parameter can be changed in a determined way. For instance, such a controlled parameter may be a solvent composition which can be changed over time during a gradient mode. Additionally or alternatively, it is also possible to use the pressure within a sample separation system, particularly the pressure of the mobile phase or the fluidic sample, as a controllable or controlled parameter.

In the context of this application, the term "non-controlled parameter" may particularly denote a parameter which is not directly or actively brought to a certain value, i.e. does not serve as a parameter being adjusted by a user or the method or by the apparatus in course of the method execution. In contrast to controlled parameters, the non-controlled parameter may change its value only indirectly as a consequence of the processes taking place in the apparatus or in the system actively controlled in accordance with controlled parameters, i.e. may float. Therefore, the non-controlled parameter may also be denoted as a resulting or floating parameter, which is free to vary. An example for such a parameter which may be non-controlled during execution of the scouting method is the flow rate of the mobile phase or fluid in the case pressure is used as a controlled parameter.

In the context of this application, the term "registering a course of the non-controlled parameter" includes that the time dependence or development of the value of the non-controlled parameter is detected and its value over time may be stored.

In the context of this application, the term "modified method" may particularly denote a method which has been changed as compared to the scouting method to thereby change a characteristic of the separation procedure. Particularly, the controlled parameters and the non-controlled parameters may differ between the modified method and the scouting method. However this does not necessarily mean that the values of parameters are different between the modified method and the scouting method. Especially it means that the course of an uncontrolled parameter resulting from an execution of the modified method might substantially follow or be the same as the programmed course of that parameter during the scouting method execution, when that parameter was a controlled parameter. In the context of this application, the term "executing the modified method under application of the registered course of the parameter as execution program" may particularly denote that the measured and recorded course (for instance development over time) of this previously non-controlled or floating parameter is converted into an operation instruction or set or sequence of instructions for the separation apparatus. Hence, this course may be input to the system as a target behaviour of the parameter during execution of the modified method. The scheme of adjusting the previously non-controlled and now controlled parameter may be performed actively in such a manner so that the floating previously non-controlled parameter will exactly follow the course which it took when carrying out the scouting method. Thus, the now controlled parameter is adjusted so that the course of this previously non-controlled parameter is exactly mapped onto the modified (or transferred) method.

According to an exemplary embodiment of the invention, a system is provided which initially carries out a scouting method such as a chromatographic method based on adjusting at least one controlled parameter, such as a fluid pressure, during executing the method. For example, the scouting method can be a run in the volume based mode, i.e. a mobile phase drive may be operated based on a determined value of the delivered volume (as disclosed in WO 2009/062538). When controlling the controlled parameter, another non-controlled parameter may freely float. Such a non-controlled parameter can be the flow rate of fluids, for example. The course of this initially non-controlled parameter may then be saved as a data set and may be fixed or frozen for future execution of a modified method. Frozen means in this context that no changes and that no deviations of this course of the flow rate will be allowed in the modified method, or that the frozen course is defined as a target behaviour of the corresponding parameter in the modified method. In other words, for a subsequent sample separation experiment the previously floating non-controlled parameter (the flow rate in the present example) is controlled, wherein the saved course is defined as a target dependency for the modified method. Hence, one or more other parameters (such as the course of pressure, the temperature of fluid and/or fluidic members, etc.) may be selected for the modified method in such a manner that the previously floating parameter will follow the characteristic of the stored course.

Therefore, it becomes possible to transfer a scouting method from a first liquid chromatography device, in which the controlled parameter can be actively controlled, to another liquid chromatography device, which does not necessarily have to have the capability to adjust the previously controlled parameter but in contrast to this is able to adjust another parameter. Therefore, it may be possible to use low cost components (such as a pump not supporting control based on the initially controlled parameter) for such a liquid chromatography device. Low cost separation apparatuses may be enabled to execute highly optimized or sophisticated methods comparable to that of high cost separation apparatuses. For instance, it is possible to start with the scouting method on a volume-based separation system in which the flow rate may be allowed to vary as an initially non-controlled parameter, whereas the pressure may be controlled or adjusted in a desired way (for instance, the machine can be operated close to its limit, i.e. at or close to a maximum pressure value). Then, the course of the flow rate (as detected for example during a gradient run) or the like can be frozen in accordance with its registered behaviour. In this example not only the course of the flow rate will be frozen, but also the course of fluid composition. The fluid composition will remain a controlled parameter in the modified method, however its course over time needs to be registered in order to be used as controlled parameter in the case a volume based operation mode of the scouting method needs to be transformed into time based operation of the modified method. The freezing of the course of this non-controlled parameter can then ensure that the development of this parameter over the gradient run can be maintained on another liquid chromatography device on which the correspondingly modified method is executed. In such a way, it becomes possible that an appropriate method for this other liquid chromatography device is generated using a highly sophisticated apparatus and then directly deployed to an apparatus with limited functionality with low effort. Even if this other liquid chromatography device has lower or other functionality that the initially used liquid chromatography device, the functionality of the initially used liquid chromatography device can be emulated by the other liquid chromatography device.

In the following, further exemplary embodiments of the process will be explained. However, these embodiments also apply to the apparatus for method development.

In an embodiment, the defining further comprises excluding an originally controlled parameter from the set of controlled parameters. Hence, the number of controlled parameters may be kept small in the modified method.

In an embodiment, the scouting method is executed with the flow rate being part of the set of originally non-controlled parameters (in the scouting method). Particularly, the flow rate may be the new controlled parameter (in the modified method). Thus, flow rate may freely float in the scouting method, and may be correspondingly controlled in the modified method. If the initially non-controlled parameter is the flow rate of the mobile phase, its recorded time dependency can be made an execution program for the modified method. However, alternatively other non-controlled parameters may be considered such as a time dependence of the temperature on a separation column or the like. The course of other controlled parameters over time may be recorded and this record may be used as execution program in the modified method rather than the initial program used in the scouting method, depending on that, if the program of the initial method was defined versus real time as process coordinate or versus another process coordinate, such as delivered volume.

In an embodiment, the registering of the course of the at least one non-controlled parameter and/or the executing of the modified method is performed during a chromatographic gradient run. Hence, the course of the corresponding parameter (particularly the flow rate) over a chromatographic run may be frozen or fixed.

In an embodiment, the scouting method is executed in accordance with a volume-based control scheme, particularly by controlling any parameters different from a flow rate of the mobile phase as controlled parameter. For example, the scouting method can be a retention volume-based method, i.e. a mobile phase drive may be operated based on a determined value of the retention volume (as disclosed in WO 2009/062538; particularly, explicit reference is made herewith to paragraphs [0048] to [0066] of WO 2009/062538). In an embodiment, an initially controlled parameter is a pressure course of a mobile phase conducted by a mobile phase drive and the initially non-controlled parameter is a flow rate of the mobile phase. While executing the scouting method, pressure may be used as an originally controlled parameter. Hence, pressure of mobile phase components constituting a composition may be programmed, adjusted, controlled or regulated in the original method.

Generally, the term "retention volume based" may be replaced by "run volume-based" or "delivered volume-based" or "volume-based", and "retention time-based" may be replaced by "time-based", because retention volume and retention time are per definition numbers describing the chromatographic behavior of a given substance. However, time and volume are here considered as physical variables in expressions "volume-based" or "time-based".

Hence, the course of pressure of the mobile phase or a part thereof may be adjusted as controlled parameter in the scouting method. Therefore, a volume-based control of a liquid chromatography system may be implemented in the execution of the scouting method. In other words, the actually flown volume may be determined and the system can then be controlled based on such volume values. For this purpose, the pressure of the mobile phase may be adjusted which may result in a time-dependent flow rate. Additionally or alternatively, other controlled parameters are possible such as the time dependence of the temperature of a separation column. Therefore, while executing the scouting method, temperature, particularly chromatographic separation column outlet temperature, may be measured and may be used as an originally controlled parameter.

In an embodiment, the recorded course of the initially non-controlled parameter is frozen and stored as a data set which is directly used for the adjusting of the course of the subsequently controlled parameter. The direct use of the stored recorded course of the non-controlled parameter means that the parameter set or data set stored will not be changed before it is used for the modified method in the described embodiment. Therefore, the obtained course of the non-controlled parameter (during executing the scouting method) may be taken without manipulating it in any way. The storage of this data may be performed on a memory device such as a semiconductor mass storage device. Therefore, the registered course may be stored as a data set which is used as program for direct control of the new controlled parameter.

In an embodiment, the registered course of the parameter is used for construction of an execution program for the new controlled parameter by processing the data describing the registered course of the parameter such that the processed data set can be used for adjusting the course of the new controlled parameter during any of following executions resulting in a close or the same course of the new controlled parameter as the course of the parameter. For instance, the processing of the registered course of may comprise data format change, data decimation, noise reduction, resampling, fitting to a mathematical function, error correction, interpolation, extrapolation, smoothing and/or data filtering. Hence, the program may also be generated by data manipulation, for instance for more convenient processing, storage, suppression of artifacts, etc. Hence, it is not necessary that the trace itself is used directly. However, the goal to maintain the original course sufficiently close should be served.

In an embodiment, the recorded course of the initially non-controlled parameter is frozen and stored as a data set which is used as source for the execution program to control the course of the subsequently controlled parameter. The use of the stored recorded course of the non-controlled parameter as a source for the execution program means that the data set may be processed prior, during or after the recording or alternatively in the process of the generation of the program. The processing may include data decimation, filtering, smoothing, error correction, format change, fitting to a formula, etc. However, this may be performed without changing the course of the recorded parameter, which means that during execution of the modified method the course of the subsequently controlled parameter may by intention be close to the course recorded during scouting method execution.

In an embodiment, the modified method is executed on another liquid chromatography device than the liquid chromatography device on which the scouting method is executed. Thus, the transfer from the scouting method to the modified method on a level of instructions (for instance on software level) may be accompanied by a transfer on a hardware level (i.e. executing the scouting method and the modified method on different liquid chromatography devices). Therefore, the method transfer may consider a different functionality of the liquid chromatography device as compared to the other liquid chromatography device. While the liquid chromatography device may be capable of executing a method by actively varying a controlled parameter over time, this capability may be lacking in the other liquid chromatography device. However, due to the freezing of the course (to be understood as dependence of a parameter on the process execution coordinate, which can but does not have to be necessarily time) of the non-controlled parameter during the method transfer and the corresponding transfer from the liquid chromatography device to the other liquid chromatography device, the functionality may be virtually mapped from one apparatus to the other one.

For instance, the other liquid chromatography device may not be capable to perform a conventional volume-based control of liquid chromatography gradient run involving a time dependence of pressure. However, by reconstructing the time dependence of parameters, which may include both initially controlled and initially non-controlled parameters such as the flow rate by the modified method, this functionality may be mimicked or emulated on the lower functionality liquid chromatography device.

In an embodiment, the modified method is stored to be executed on a liquid chromatography/mass spectrometry device (LC/MSD) as the sample separation apparatus, i.e. a coupled liquid chromatography and mass spectroscopy device (for instance of the 1200 Series LC/MSD of Agilent Technologies). Particularly, such an apparatus may be a combination of a liquid chromatography apparatus for separating different components of a fluidic sample and a mass spectroscopy device arranged downstream of the liquid chromatography apparatus so as to identify the various peaks or fractions separated by the liquid chromatography apparatus. However, such a mass spectroscopy device may not be capable of being operated under a condition in which the flow rate is freely floating because the sensor results will depend on the actual flow rate. By applying a frozen time dependency of the flow rate to a mass spectroscopy device, a calibrated or reproducible course of the flow rate can be followed which allows the implementation of a mass spectroscopy device with a chromatographic method in which the flow rate changes over time. The efficiency of the interface between separation column and mass spectroscopy device often is flow-dependent so that it is important for operation of a mass spectrometry device that the conditions are reproducible. By executing a calibrated modified method on a mass spectrometry device, standardized conditions may be present which allows such an execution even when carrying out the chromatographic method in a volume-based way with variable flow rate.

In an embodiment a calibration of a detector sensitivity for different substances separated on the sample separation unit for a detector which can be influenced by the flow rate, such as LC (liquid chromatography) -coupled mass spectrometer may be accomplished during the scouting method execution. This means, that the scouting method may be executed using a calibrated standard as a sample for separation and the calibration factors are determined for sample components of interest. Thus a calibration factor for each sample component will automatically consider for the momentary value of the flow rate corresponding to the separation stage, when the sample component is detected by the detector. Subsequently when the modified method (which may be run according to the flow rate program provided by freezing the flow rate course of the scouting method) is executed the calibration factors will still be valid because the separation progress stage and thus the momentary flow rate during elution of a sample component will be the same as in the calibration run.

In an embodiment, defining the modified method comprises adding at least one instruction to the scouting method, excluding at least one instruction from the scouting method and/or modifying at least one instruction of the scouting method. Thus, the transfer from the method to the modified method may maintain the instructions and parameters of the scouting method, however adding an additional set of instructions and/or parameters to the modified method reflecting the necessity that the recorded time dependency of the course of the non-controlled parameter is also observable when executing the modified method. Therefore, the newly designed method may be used as a master for many subsequent chromatographic runs, i.e. may serve as a new standard method for the other sample separation apparatus. Removal or amendment of instructions is however possible as well during the method transfer.

In an embodiment, the modified method is stored to be executed for multiple sample separation procedures on a sample separation apparatus. Data being indicative for the modified method may be permanently stored on a corresponding data carrier of the respective sample separation apparatus. Thus, the modified method may be stored to be adjusted for following execution.

In an embodiment, the modified method is stored in a format that all controlled parameters are now defined as a function of recorded time. The modified method may be configured as a time based method.

If a volume based method is transformed onto a system without volume based capabilities, not only the flow rate may be converted from a non-controlled parameter to a controlled parameter and its course is frozen, but the course of all controlled parameters (such as composition, a controlled temperature being programmed to be not constant over time, etc.) changing over time may be frozen. These frozen courses may be used in the modified method as programs, since the programs itself do not change, but the variable against which the programs are processed are changed from "Delivered Volume" to "Real Time". This may render the freezing of the courses of all influenced controlled parameters necessary. In case of a non-volume-based system, the exchange of the process coordinate from volume to time requires this additional freezing of the courses of all initially controlled parameters.

### BRIEF DESCRIPTION OF DRAWINGS

Other objects and many of the attendant advantages of embodiments of the present invention will be readily appreciated and become better understood by reference to the following more detailed description of embodiments in connection with the accompanied drawings. Features that are substantially or functionally equal or similar will be referred to by the same reference signs.
Fig. 1 shows a liquid chromatography device coupled to a connected mass spectrometry device (LC/MSD) being operable according to an exemplary embodiment of the invention.
Fig. 2 illustrates an apparatus according to an exemplary embodiment of the invention for transferring a chromatographic method of operating a liquid chromatography apparatus to another liquid chromatography apparatus with connected mass spectrometry device.
Fig. 3 is a flowchart of a process for developing a method of operating a liquid chromatography device for separating a fluidic sample using a mobile phase according to an exemplary embodiment of the invention.
Fig. 4 is a scheme illustrating as to how controlled and non-controlled parameters of a chromatographic method are exchanged during a method transfer.

The illustration in the drawing is schematically.

Before the figures will be described in detail, some basic considerations of the present inventors will be summarized based on which exemplary embodiments of the invention have been developed.

Running gradients in HPLC in the form of a composition being a function of volume rather than of time allows variety of operation modes for better throughput or efficiency, as for instance constant pressure operation mode. It is readily applicable in combination with purely concentration sensitive detectors and with purely mass sensitive detectors. However, detectors with pronounced dependency of the response factors versus flow rate (mixed sensitivity detectors, as for instance mass spectrometry (MS) detectors with most liquid chromatography-mass spectrometry (LC-MS) interfaces) would provide decreased quantitation reproducibility due to possible flow rate variation from run to run (caused by possible variations of the system flow resistance) when maintaining constant pressure. Embodiments of the invention may combine advantages of constant pressure or generally variable flow approach with advantages of fixed flow rate operation.

In order to make use of the advantages of the pressure controlled mode such as high throughput and non-existence of pressure-born flow and composition disturbances and at the same time be able to achieve similar quantitation reproducibility as in the fixed flow mode the following workflow can be applied by embodiments of the invention: Once or regularly, preferably at the same time with a calibration run for the detector (because mixed sensitivity detectors require calibration anyway) a so-called Master Run may be executed, which may be run in variable flow (for instance constant pressure) mode. The flow over time profile for this run may be recorded and may be used for the following series of runs as so-called Master; this means that analysis runs are executed in programmed flow mode, whereas the flow program exactly repeats the recorded profile. Alternatively, the Master Run is used to generate flow and composition over time profiles; in this case the analysis runs can be executed in the time based mode. This workflow may provide nearly the same pressure profile as the Master Run (the possible deviation being caused by eventual variations of the system flow resistance), thus the major optimization of the run conditions would already have taken place during the Master Run. However, the flow rate corresponding to any time or volume element in the gradient, and consequently to any eluted peak can be the same throughout a series of analyses and thus the similar reproducibility over multiple runs as in conventional fixed flow mode may be achieved.

It may still be permissible to allow a flow rate variation when running against pressure limit (given the run execution is in the volume mode). In this case, the operator may be informed about possibly decreased reproducibility of quantitation of the affected runs or may be asked to decide about operation if running into pressure limit.

Exemplary embodiments may be a combination of two or more or all of the following elements: step over to variable flow mode, so that the system executes the run freely running in optimized regime; freezing this regime as Master; running a number of analyses with the flow rate and composition profile following the Master in order to provide enhanced reproducibility of flow rate sensitive detectors.

In the above considerations the Master Run corresponds to executing a Scouting Method as described previously.

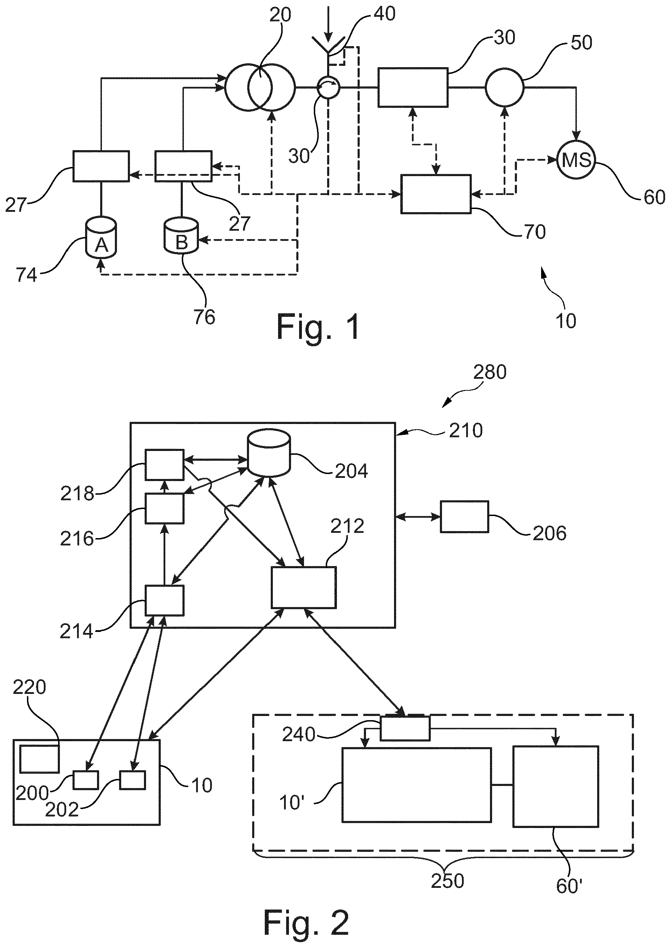

Referring now in greater detail to the drawings, Fig. 1 depicts a general schematic of a liquid separation system 10. A pump 20 receives a mobile phase from a solvent supply 74, 76, typically via a degasser 27, which degases and thus reduces the amount of dissolved gases in the mobile phase. The mobile phase received from the solvent supply 74, 76 is composed of a first solvent contained in a first solvent container 74 and of a second solvent contained in a second solvent container 76. The pump 20 - as a mobile phase drive - drives the mobile phase through a separating device 30 (such as a chromatographic column) comprising a stationary phase. A sampling unit 40 can be provided between the pump 20 and the separating device 30 in order to subject or add (often referred to as sample introduction) a sample fluid into the mobile phase using a switchable fluid valve 90. The stationary phase of the separating device 30 is configured for separating compounds of the sample fluid. A detector 50 (such as a UV or a fluorescence detector) may optionally be provided for detecting separated compounds of the sample fluid. A mass spectrometry device 60 can be provided for more sensitive detection and / or better identification of separated compounds of sample fluid. Mass spectrometry device 60 is connected at the outlet of the liquid chromatography apparatus 10, i.e. is used as additional detector of various fractions or peaks to improve reliability and / or sensitivity of the separation results , whereas the mentioned peaks are resulting from the before mentioned executed liquid chromatography separation.

While the mobile phase can be comprised of one solvent only, it may also be mixed from plural solvents. Such mixing might be a low pressure mixing and provided upstream of the pump 20, so that the pump 20 already receives and pumps the mixed solvents as the mobile phase. Alternatively, the pump 20 might be comprised of plural individual pumping units, with plural of the pumping units each receiving and pumping a different solvent or mixture, so that the mixing of the mobile phase (as received by the separating device 30) occurs at high pressure und downstream of the pump 20 (or as part thereof). The composition (mixture) of the mobile phase may be kept constant over time, the so called isocratic mode, or varied over time, the so called gradient mode.

A data processing unit 70, which can be a conventional PC or workstation, might be coupled (as indicated by the dotted arrows) to one or more of the devices in the liquid separation system 10 in order to receive information and/or control operation. For example, the data processing unit 70 might control operation of the pump 20 (for instance setting control parameters) and receive therefrom information regarding the actual working conditions (such as output pressure, flow rate, etc. at an outlet of the pump). The data processing unit 70 might also control operation of the solvent supply 74, 76 (for instance setting the solvent/s or solvent mixture to be supplied) and/or the degasser 27 (for instance setting control parameters such as vacuum level) and might receive therefrom information regarding the actual working conditions (such as solvent composition supplied over time, flow rate, vacuum level, etc.). The data processing unit 70 might further control operation of the sampling unit 40 (for instance controlling sample injection or synchronization sample injection with operating conditions of the pump 20). The separating device 30 might also be controlled by the data processing unit 70 (for instance selecting a specific flow path or column, setting operation temperature, etc.), and send - in return - information (for instance operating conditions) to the data processing unit 70. Accordingly, the detector 50 might be controlled by the data processing unit 70 (for instance with respect to spectral or wavelength settings, setting time constants, start/stop data acquisition), and send information (for instance about the detected sample compounds) to the data processing unit 70. The data processing unit 70 might also control operation of the mass spectrometry device 60 (for instance in conjunction with data received from the detector 50) and provides data back.

A set of instructions and parameter values, denoted as chromatographic method, may be used for executing a chromatographic separation experiment on the liquid chromatography apparatus 10.

Fig. 2 illustrates an arrangement 280 comprising an apparatus 210 for developing a chromatographic method for operating a liquid chromatography/mass spectrometry apparatus 250 for separating a fluidic sample using a mobile phase according to an exemplary embodiment of the invention. Apart from the apparatus 210, arrangement 280 comprises a liquid chromatography apparatus 10 as well as the combined liquid chromatography/mass spectrometry apparatus 250 which is in turn constituted of a liquid chromatography apparatus 10' and a connected mass spectrometry device 60'.

The liquid chromatography apparatus 10 can be constituted as shown in Fig. 1 and may have or may not have the mass spectrometry device 60. Moreover, this liquid chromatography apparatus 10 comprises a first flow sensor 200 capable of detecting a first flow rate of a first component of the mobile phase and comprises a second flow sensor 202 capable of detecting a second flow rate of a second component of the mobile phase.

It shall be mentioned that the implementation of flow sensors 200, 202 are only exemplary and that other embodiments may either omit any such sensors or may use other sensors. Thus, the implementation of one or more flow sensors is merely optional.

For instance, the first flow sensor 200 may be located between reference numerals 74 and 20 in Fig. 1. For instance, the second flow sensor 202 may be located between reference numerals 76 and 20 in Fig. 1. A larger or smaller number of flow sensors may be foreseen in the liquid chromatography device 10 as well. Furthermore, a method execution unit 220 is provided in the liquid chromatography apparatus 10. A chromatographic method to be executed on the liquid chromatography device 10 and including a set of instructions and parameter values can be supplied to the method execution unit 220. The method execution unit 220 will carry out the chromatographic method on the liquid chromatography device 10 and will then separate a fluidic sample accordingly. Alternatively, the method execution unit 220 may also form part of the apparatus 210.

Accordingly, a method execution unit 240 of the combined liquid chromatography/mass spectrometry apparatus 250 is capable of performing a liquid chromatography separation within the liquid chromatography system 10' and may also operate the connected mass spectrometry device 60' in accordance with a certain method. Alternatively, the method execution unit 240 may also form part of the apparatus 210. Method execution units 220 and 240 may also be integrally formed as one common processor rather than as two separate processors.

Apparatus 210 has an interface to an input/output unit 206 via which a user can input control commands to the apparatus 210 or may be supplied with information.

In the following, operation of the apparatus 210 will be described in more detail.

A database 204 of the apparatus 210 which may be realized as a memory device is capable of storing data such as instructions and/or parameter sets relating to one or more different liquid chromatography methods. Any other information or software may be stored on the database 204 as well.

The apparatus 210 comprises an execution unit 212 which is configured for executing a scouting method for separating a fluidic sample on the liquid chromatography system 10 by controlling a set of controlled parameters during the execution of the scouting method. Execution unit 212 may alternatively be integrally formed with method execution unit(s) 220 and/or 240. Another set of non-controlled parameters is allowed to freely vary during the execution of the scouting method. The scouting method is an initial or already present method defined by a data set stored in the database 204. During executing this chromatographic scouting method, several controlled parameters may be actively controlled by the execution unit 212. In an embodiment, this control involves the adjustment of pressure values of the fluids propagating through the liquid chromatography system 10. When controlling the fluid separation procedure by the liquid chromatography apparatus 10, also the volume of the components of the mobile phase may be controlled, wherein the flow rate of the components of the mobile phase and of the entire mobile phase will not be actively controlled but will freely vary or float during the method execution.

A registering unit 214 is configured for registering a course of one or more of the non-controlled parameters, particularly of the flow rates, during the execution of the scouting method by the execution unit 212. The flow sensors 200, 202 are capable and configured for detecting the course of the respective flow rate during execution of the chromatographic method. The recording or registering unit 214 performs this recording of the course of the flow rates during the execution of the initial chromatographic method. It is possible to store the corresponding time dependency of the flow rates as measured by the flow sensors 200, 202, for example in database 204.

A defining unit 216 is supplied with the flow rate course as registered by the registering unit 214 and is configured for defining a modified method for separating a fluidic sample derived from the scouting method. This method transfer is performed by changing the set of controlled parameters, declaring the previously registered non-controlled parameters (the flow rates) as new controlled parameters in the modified method and excluding an originally controlled parameter (such as the fluid pressure) from the set of controlled parameters.

Based on the scouting method and based on the measured course of the flow rate of the fluids, the modified chromatographic method to be executed by the combined liquid chromatography/mass spectrometry apparatus 250 can hence be developed. For this purpose, the course of the flow rate as determined by the sensors 200, 202 is frozen. In other words, it is rigidly controlled that during executing the modified method, the time dependency of the flow rate as determined by the sensors 200, 202 during executing the scouting method by liquid chromatography apparatus 10 will also be followed within the combined liquid chromatography/mass spectrometry apparatus 250 during executing the modified method. The defining unit 216 is hence configured for defining the modified chromatographic method for separating a fluidic sample in the combined liquid chromatography/mass spectrometry apparatus 250 based on the scouting method by freezing the recorded course of the flow rate for the modified method.

A further execution unit 218 is supplied with output data from the defining unit 216, can also access the database 204 for reading and writing data, and is configured for executing the modified method under application of the registered course of the flow rate as execution program for the flow rate in the role of a new controlled parameter (in the context of the modified method). The further execution unit 218 is hence configured for adjusting a course of parameters in the modified method so that, by executing the modified method in accordance with the adjusted parameters, the flow rate in the combined liquid chromatography/mass spectrometry apparatus 250 will follow the course of the flow rate recorded during the execution of the scouting method.

Hence, the scouting method can be been transferred from the liquid chromatography device 10 to the liquid chromatography device 10'/mass spectrometry device 60'. Even if at least a part of components of the combined liquid chromatography/mass spectrometry apparatus 250 is not capable of performing a volume-based operation as liquid chromatography device 10, the freezing of the flow rate for the execution of the modified method allows to mimic such a performance. Therefore, even if for instance the pump of the combined liquid chromatography/mass spectrometry apparatus 250 does not support such a volume-based control, it will nevertheless indirectly allow to make use of the advantages of such a volume-based operation.

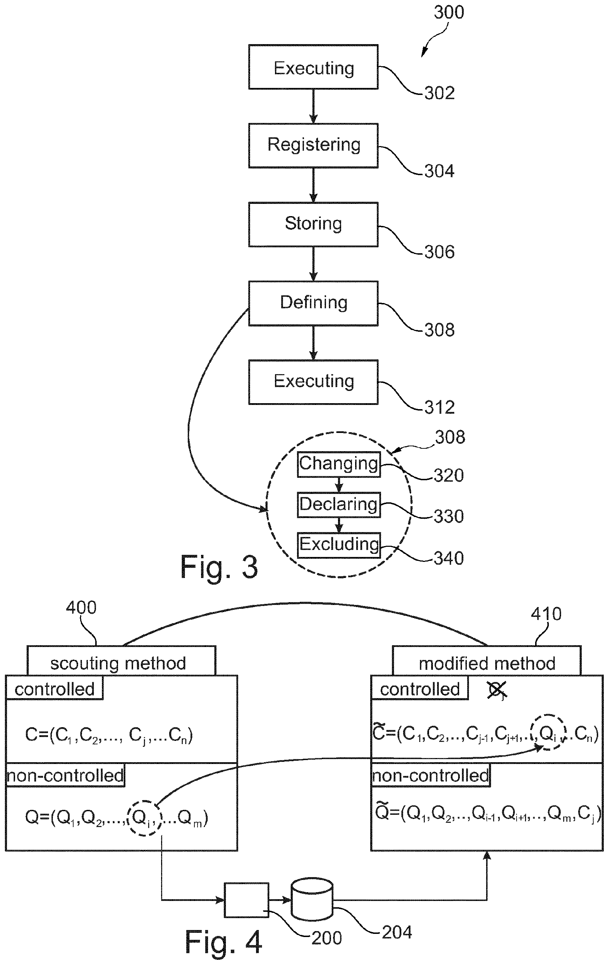

Fig. 3 is a flowchart of a process 300 for developing a method of operating sample separation apparatuses (such as apparatuses 10, 250) for separating fluidic samples using a mobile phase according to an exemplary embodiment of the invention. Fig. 4 is a corresponding scheme illustrating as to how controlled and non-controlled parameters of such chromatographic methods are exchanged during such a method transfer.

The process 300 is performed for transferring a scouting method 400 of operating a sample separation apparatus 10 (for separating a fluidic sample using a mobile phase) to a modified method 410 of operating another sample separation apparatus 250 (for separating another fluidic sample using another mobile phase). The process 300 comprises executing, see block 302, the scouting method 400 for separating the fluidic sample by controlling a set of controlled parameters C during the execution of the scouting method 400. Non-controlled parameters Q are allowed to freely vary during the execution of the scouting method 400. Subsequently, a course of at least one non-controlled parameter Qi is registered, see block 304, during the execution of the scouting method 400. Then, the modified method 410 derived from the scouting method 400 is defined, see block 308. This defining is performed by changing, see block 320, the set of controlled parameters C. The previously registered non-controlled parameter Qi is declared and used as a new controlled parameter in the modified method 410, see block 330. An originally controlled parameter Cj is excluded, see block 340, from the set of controlled parameters. In block 312, the modified method 410 is executed under application of the registered course of the parameter Qi as execution program for this parameter Qi in the role of new controlled parameter.

The registered parameter Qi is a flow rate of a component of the mobile phase which is initially non-controlled and then declared and used as a controlled parameter. The initially controlled parameters C include a parameter Cj relating to a pressure applied to the mobile phase. This initially controlled parameter Cj is then excluded from the set of controlled parameters and is declared and treated as a non-controlled parameter (see Fig. 4).

Conventional approaches of method development use a separation to guide towards an improved method. Embodiments of the invention intend to allow to transfer an improved method applicable to advanced machines into another method which then can be run on a less complex machine but will provide all or most of the benefits of the improved method. Embodiments of the invention are not restricted to only a volume-based initial method. Embodiments of the invention also cover a manual interaction, recorded and reproduced. Constant pressure operation in the scouting method is a preferred option, but is not mandatory. An embodiment of the invention can use a measurement signal to be recorded, but this does not necessarily has to be a traditional analytical signal. The registered course may relate to a signal or parameter that is recorded and is related to the operation of the machine or to the separation process, but may then serve as a controlled parameter during execution. Embodiments of the invention are not limited to the production of such a modified method using a volume-based equipment, but include the reproductive execution on any machine. Embodiments of the invention may even be applied on instrumentation which has no volume-based capabilities or features. Embodiments of the invention may include a quantitative work using a mass-sensitive or mix-mode sensitive detector (like MS or ELSD).

It should be noted that the term "comprising" does not exclude other elements or features and the "a" or "an" does not exclude a plurality. Also elements described in association with different embodiments may be combined. It should also be noted that reference signs in the claims shall not be construed as limiting the scope of the claims.

## Claims

1. A process (300) for developing a method of operating a liquid chromatography device (10) for separating a fluidic sample using a mobile phase, wherein the process (300) comprises:
executing (302) a scouting method (400) for separating a fluidic sample by controlling a set of controlled parameters **(*C)*** during the execution of the scouting method (400), wherein non-controlled parameters **(*Q*)** are allowed to freely vary during the execution of the scouting method (400);
registering (304) a course of at least one non-controlled parameter (Qᵢ) during the execution of the scouting method (400), the time dependence or development of the value over time of the non-controlled parameter (Qᵢ) being detected and stored;
defining (308) a modified method (410) for separating a fluidic sample derived from the scouting method (400) by changing (320) the set of controlled parameters **(*C*)** and declaring (330) the previously registered non-controlled parameter (Qᵢ) as a new controlled parameter in the modified method (410);
executing (312) the modified method (410) under application of the registered course of the parameter (Qᵢ) as execution program for this parameter (Qᵢ) in the role of new controlled parameter;
**characterized in that**
the scouting method (400) is executed (302) with a flow rate of at least a part of the mobile phase being part of the set of originally non-controlled parameters (***Q***); and **in that**
the modified method (410) is executed with the flow rate being the new controlled parameter.

2. The process according to claim 1, comprising at least one of the following features:
defining (308) the modified method (410) further comprises excluding (340) an originally controlled parameter (Cⱼ) from the set of controlled parameters;
the scouting method (400) is executed (302) in accordance with a volume-based control scheme by controlling parameters different from a flow rate of the mobile phase as controlled parameters;
a flow rate of at least a part of the mobile phase is an originally non-controlled parameter (Qᵢ).

3. The process according to claim 1 or 2, comprising at least one of the following features:
while executing (302) the scouting method (400), pressure of at least a part of the mobile phase is used as an originally controlled parameter (Cⱼ);
at least one of the group consisting of the registering (304) of the course of the at least one non-controlled parameter (Qᵢ), and the executing (312) of the modified method (410) is performed during a chromatographic gradient run.

4. The process according to any of claims 1 to 3, wherein, while executing (302) the scouting method (400), temperature, particularly chromatographic separation column outlet temperature, is measured and is used as an originally controlled parameter.

5. The process according to any of claims 1 to 4, comprising at least one of the following features:
the registered course of the parameter (Qᵢ) is fixed and stored (306) as a data set which is directly used for adjusting (310) the course of the new controlled parameter during any of following executions;
the registered course of the parameter (Qᵢ) is used for construction of an execution program for the new controlled parameter by processing the data describing the registered course of the parameter (Qᵢ) such that the processed data set can be used for adjusting (310) the course of the new controlled parameter during any of following executions resulting in a close or the same course of the new controlled parameter as the course of the parameter (Qᵢ);
the registered course of the parameter (Qᵢ) is used for construction of an execution program for the new controlled parameter by processing the data describing the registered course of the parameter (Qᵢ) such that the processed data set can be used for adjusting (310) the course of the new controlled parameter during any of following executions resulting in a close or the same course of the new controlled parameter as the course of the parameter (Qᵢ), wherein the processing of the registered course of the parameter (Qᵢ) comprises at least one of the group consisting of data format change, data decimation, noise reduction, resampling, fitting to a mathematical function, error correction, interpolation, extrapolation, smoothing, and data filtering.

6. The process according to any of claims 1 to 5, comprising at least one of the following features:
the registered course is stored (306) as a data set which is used as a basis for the execution program for direct control of the new controlled parameter (Qᵢ);
the execution program of the new controlled parameter (Qᵢ) is stored based on the recorded data set of the originally non-controlled parameter (Qᵢ).

7. The process according to any of claims 1 to 6, wherein the modified method (410) is executed (312) on another liquid chromatography device (10') than the liquid chromatography device (10) on which the scouting method (400) is executed (302).

8. The process according to any of claims 1 to 7, comprising at least one of the following features:
the modified method (410) is stored to be executed (312) on a liquid chromatography/mass spectrometry device (10', 60');
defining (308) the modified method (410) comprises at least one of the group consisting of adding at least one instruction to the scouting method (400), excluding at least one instruction from the scouting method (400), and modifying at least one instruction of the scouting method (400);
the modified method (410) is stored to be executed (312) for multiple sample separation procedures on a sample separation apparatus (10);
the modified method (410) is stored to be adjusted (310) for following execution (312);
the modified method (410) is stored in a format that all controlled parameters are now defined as a function of recorded time.

9. An apparatus (210) for developing a method of operating a liquid chromatography device (10) for separating a fluidic sample using a mobile phase, wherein the apparatus (210) comprises:
an execution unit (212) configured for executing (302) a scouting method (400) for separating a fluidic sample by controlling a set of controlled parameters **(*C)*** during the execution of the scouting method (400), wherein non-controlled parameters **(*Q*)** are allowed to vary freely during the execution of the scouting method (400);
a registering unit (214) configured for registering (304) a course of at least one non-controlled parameter (Qᵢ) during the execution of the scouting method (400), the time dependence or development of the value over time of the non-controlled parameter (Qᵢ) being detected and stored;
a defining unit (216) configured for defining (308) a modified method (410) for separating a fluidic sample derived from the scouting method (400) by changing (320) the set of controlled parameters **(*C*)** and declaring (330) the previously registered non-controlled parameter (Qᵢ) as a new controlled parameter in the modified method (410);
a further execution unit (218) configured for executing (312) the modified method (410) under application of the registered course of the parameter (Qᵢ) as execution program for this parameter (Qᵢ) in the role of new controlled parameter;
wherein a flow rate of at least a part of the mobile phase is part of the set of originally non-controlled parameters (***Q***); and
wherein the flow rate is the new controlled parameter.

## Patentansprüche

1. Ein Prozessablauf (300) zum Entwickeln eines Verfahrens des Betreibens einer Flüssigkeitschromatographie-Vorrichtung (10) zum Trennen einer fluidischen Probe unter Verwendung einer mobilen Phase, wobei der Prozessablauf (300) aufweist:
Durchführen (302) eines Aufklärungsverfahrens (400) zum Trennen einer fluidischen Probe durch Steuern eines Satzes von gesteuerten Parametern (C) während der Durchführung des Aufklärungsverfahrens (400), wobei es nicht-gesteuerten Parametern (Q) ermöglicht ist, während der Durchführung des Aufklärungsverfahrens (400) frei zu variieren;
Erfassen (304) eines Verlaufs von mindestens einem nicht-gesteuerten Parameter (Qᵢ) während der Durchführung des Aufklärungsverfahrens (400), wobei die Zeitabhängigkeit oder -entwicklung des Wertes des nicht-gesteuerten Parameters (Qᵢ) über der Zeit detektiert und gespeichert wird;
Definieren (308) eines modifizierten Verfahrens (410) zum Trennen einer fluidischen Probe, welches Verfahren von dem Aufklärungsverfahren (400) hergeleitet ist durch Verändern (320) des Satzes der gesteuerten Parameter (C) und Erklären (330) des zuvor erfassten, nicht-gesteuerten Parameters (Qᵢ) als einen neuen gesteuerten Parameter in dem modifizierten Verfahren (410);
Durchführen (312) des modifizierten Verfahrens (410) unter Anwendung des erfassten Verlaufs des Parameters (Qᵢ) als Durchführungsprogramm für diesen Parameter (Qᵢ) in der Rolle des neuen, gesteuerten Parameters;
**dadurch gekennzeichnet, dass**
das Aufklärungsverfahren (400) mit einer Durchflussrate von zumindest einem Teil der mobilen Phase, die Teil des Satzes der ursprünglichen, nicht-gesteuerten Parameter (Q) ist, durchgeführt (302) wird,
und dadurch dass
das modifizierte Verfahren (410) mit der Durchflussrate, die der neue, gesteuerte Parameter ist, durchgeführt wird.

2. Der Prozessablauf gemäß Anspruch 1, ferner aufweisend eines der folgenden Merkmale:
Definieren (308), dass das modifizierte Verfahren (410) ferner ein Ausschließen (340) eines ursprünglichen, gesteuerten Parameters (Cⱼ) aus dem Satz der gesteuerten Parameter aufweist;
das Aufklärungsverfahren (400) wird durchgeführt (302) gemäß einem volumenbasierten Steuerungsplan durch Steuern von Parametern, die von einer Durchflussrate der mobilen Phase als gesteuerte Parameter verschieden sind;
eine Durchflussrate von zumindest einem Teil der mobilen Phase ist ein ursprünglicher, nicht-gesteuerter Parameter (Qᵢ).

3. Der Prozessablauf gemäß Anspruch 1 oder 2, ferner aufweisend eines der folgenden Merkmale:
während des Durchführens (302) des Aufklärungsverfahrens (400) wird ein Druck von zumindest einem Teil der mobilen Phase ein ursprünglicher, gesteuerter Parameter (Cⱼ) verwendet;
zumindest eines von der Gruppe, die aus dem Erfassen (304) des Verlaufs des mindestens einen nicht-gesteuerten Parameters (Qᵢ) und dem Durchführen (312) des modifizierten Verfahrens (410) besteht, wird während eines chromatographischen Gradienten-Durchlaufs durchgeführt.

4. Der Prozessablauf gemäß einem der Ansprüche 1 bis 3, wobei während des Durchführens (302) des Aufklärungsverfahrens (400), eine Temperatur, insbesondere eine Auslasstemperatur einer chromatographischen Trennsäule, wird gemessen und wird als ein ursprünglicher, gesteuerter Parameter verwendet.

5. Der Prozessablauf gemäß einem der Ansprüche 1 bis 4, ferner aufweisend eines der folgenden Merkmale:
der erfasste Verlauf des Parameters (Qᵢ) wird festgelegt und gespeichert (306) als ein Datensatz, der direkt verwendet wird zum Einstellen (310) des Verlaufs des neuen, gesteuerten Parameters während irgendeiner der nachfolgenden Durchführungen;
der erfasste Verlauf des Parameters (Qᵢ) wird verwendet zur Entwicklung eines Durchführungsprogramms für den neuen, gesteuerten Parameter durch Verarbeiten der Daten, die den erfassten Verlauf des Parameters (Qᵢ) beschreiben, so dass der verarbeitete Datensatz zum Einstellen (310) des Verlaufs des neuen, gesteuerten Parameters während irgendeiner der nachfolgenden Durchführungen, die in einem nahen oder demselben Verlauf des neuen, gesteuerten Parameters als dem Verlauf des Parameters (Qᵢ) resultieren, verwendet werden kann;
der erfasste Verlauf des Parameters (Qᵢ) wird verwendet zur Entwicklung eines Durchführungsprogramms für den neuen, gesteuerten Parameter durch Verarbeiten der Daten, die den erfassten Verlauf des Parameters (Qᵢ) beschreiben, so dass der verarbeitete Datensatz zum Einstellen (310) des Verlaufs des neuen, gesteuerten Parameters während irgendeiner der nachfolgenden Durchführungen, die in einem nahen oder demselben Verlauf des neuen, gesteuerten Parameters als dem Verlauf des Parameters (Qᵢ) resultieren, verwendet werden kann, wobei das Verarbeiten des erfassten Verlaufs des Parameters (Qᵢ) zumindest eines aufweist aus der Gruppe, die aus einer Datenformatänderung, einer Datendezimierung, einer Rauschunterdrückung, einer Wiederholungsprobennahme, einem Fitten an eine mathematische Funktion, einer Fehlerkorrektur, einer Interpolation, einer Extrapolation, einem Glätten und einem Datenfiltern besteht.

6. Der Prozessablauf gemäß einem der Ansprüche 1 bis 5, ferner aufweisend eines der folgenden Merkmale:
der erfasste Verlauf wird gespeichert (306) als ein Datensatz, der als Grundlage für das Durchführungsprogramm für eine direkte Steuerung des neuen, gesteuerten Parameters (Qᵢ) verwendet wird;
das Durchführungsprogramm des neuen, gesteuerten Parameters (Qᵢ) wird gespeichert auf der Grundlage des erfassten Datensatzes des ursprünglichen nicht-gesteuerten Parameters (Qᵢ).

7. Der Prozessablauf gemäß einem der Ansprüche 1 bis 6, wobei das modifizierte Verfahren (410) auf einer anderen Flüssigkeitschromatographie-Vorrichtung (10') durchgeführt (312) wird als der Flüssigkeitschromatographie-Vorrichtung (10), auf der das Aufklärungsverfahren (400) durchgeführt (302) wird.

8. Der Prozessablauf gemäß einem der Ansprüche 1 bis 7, ferner aufweisend eines der folgenden Merkmale:
das modifizierte Verfahren (410) wird gespeichert, um auf einer Flüssigkeitschromatographie/Massenspektrometrie-Vorrichtung (10', 60') durchgeführt (312) zu werden;
Definieren (308), dass das modifizierte Verfahren (410) zumindest eines aufweist aus der Gruppe, die aus einem Hinzufügen von mindestens einem Befehl zu dem Aufklärungsverfahren (400), einem Ausschließen von mindestens einem Befehl aus dem Aufklärungsverfahren (400) und einem Modifizieren von mindestens einem Befehl des Aufklärungsverfahrens (400) besteht;
das modifizierte Verfahren (410) wird gespeichert, um für mehrere Probentrennvorgänge auf einer Probentrennvorrichtung (10) durchgeführt (312) zu werden;
das modifizierte Verfahren (410) wird gespeichert, um für eine nachfolgende Durchführung (312) eingestellt (310) zu werden;
das modifizierte Verfahren (410) wird derart in einem Format gespeichert, dass alle gesteuerten Parameter nun als eine Funktion der erfassten Zeit definiert sind.

9. Ein System (210) zum Entwickeln eines Verfahrens des Betreibens einer Flüssigkeitschromatographie-Vorrichtung (10) zum Trennen einer fluidischen Probe unter Verwendung einer mobilen Phase, wobei das System (210) aufweist:
eine Durchführungseinheit (212), die eingerichtet ist zum Durchführen (302) eines Aufklärungsverfahrens (400) zum Trennen einer fluidischen Probe durch Steuern eines Satzes von gesteuerten Parametern (C) während der Durchführung des Aufklärungsverfahrens (400), wobei es nicht-gesteuerten Parametern (Q) ermöglicht ist, während der Durchführung des Aufklärungsverfahrens (400) frei zu variieren;
eine Erfasseinheit (214), die eingerichtet ist zum Erfassen (304) eines Verlaufs von mindestens einem nicht-gesteuerten Parameter (Qᵢ) während der Durchführung des Aufklärungsverfahrens (400), wobei die Zeitabhängigkeit oder -entwicklung des Wertes des nicht-gesteuerten Parameters (Qᵢ) über der Zeit detektiert und gespeichert wird;
eine Definiereinheit (216), die eingerichtet ist zum Definieren (308) eines modifizierten Verfahrens (410) zum Trennen einer fluidischen Probe, welches Verfahren von dem Aufklärungsverfahren (400) hergeleitet ist durch Verändern (320) des Satzes der gesteuerten Parameter (C) und Erklären (330) des zuvor erfassten, nicht-gesteuerten Parameters (Qᵢ) als einen neuen gesteuerten Parameter in dem modifizierten Verfahren (410);
eine weitere Durchführungseinheit (218), die eingerichtet ist zum Durchführen (312) des modifizierten Verfahrens (410) unter Anwendung des erfassten Verlaufs des Parameters (Qᵢ) als Durchführungsprogramm für diesen Parameter (Qᵢ) in der Rolle des neuen, gesteuerten Parameters;
wobei eine Durchflussrate von zumindest einem Teil der mobilen Phase ein Teil des Satzes der ursprünglichen, nicht-gesteuerten Parameter (Q) ist, und
wobei die Durchflussrate der neue gesteuerte Parameter ist.

## Revendications

1. Procédé (300) pour développer une méthode d'exploitation d'un dispositif de chromatographie liquide (10) destiné à séparer un échantillon fluidique à l'aide d'une phase mobile, dans lequel le procédé (300) comprend :
l'exécution (302) d'une méthode d'exploration (400) destinée à séparer un échantillon fluidique en régulant un jeu de paramètres régulés (*C*) pendant l'exécution de la méthode d'exploration (400), dans lequel des paramètres non régulés (*Q*) sont autorisés à varier librement pendant l'exécution de la méthode d'exploration (400) ;
l'enregistrement (304) d'une évolution d'au moins un paramètre non régulé (Qᵢ) pendant l'exécution de la méthode d'exploration (400), la dépendance au temps ou le développement de la valeur au cours du temps du paramètre non régulé (Qᵢ) étant détecté(e) et stocké(e) ;
la définition (308) d'une méthode modifiée (410) destinée à séparer un échantillon fluidique obtenu à partir de la méthode d'exploration (400) en changeant (320) le jeu de paramètres régulés (*C*) et en déclarant (330) le paramètre non régulé antérieurement enregistré (Qᵢ) en tant que nouveau paramètre régulé dans la méthode modifiée (410) ;
l'exécution (312) de la méthode modifiée (410) lors de l'application de l'évolution enregistrée du paramètre (Qᵢ) en tant que programme d'exécution pour ce paramètre (Qᵢ) dans le rôle de nouveau paramètre régulé ;
**caractérisé en ce que**
la méthode d'exploration (400) est exécutée (302) avec un débit d'au moins une partie de la phase mobile faisant partie du jeu de paramètres non régulés à l'origine (*Q*) ; et **en ce que**
la méthode modifiée (410) est exécutée en faisant du débit le nouveau paramètre régulé.

2. Procédé selon la revendication 1, comprenant au moins l'une des particularités suivantes :
la définition (308) de la méthode modifiée (410) comprend en outre l'exclusion (340) d'un paramètre régulé à l'origine (Cⱼ) du jeu de paramètres régulés ;
la méthode d'exploration (400) est exécutée (302) en conformité avec un schéma de régulation basée sur le volume en régulant des paramètres différents d'un débit de la phase mobile en tant que paramètres régulés ;
un débit d'au moins une partie de la phase mobile est un paramètre non régulé à l'origine (Qᵢ).

3. Procédé selon la revendication 1 ou 2, comprenant au moins l'une des particularités suivantes :
pendant l'exécution (302) de la méthode d'exploration (400), la pression d'au moins une partie de la phase mobile est utilisée en tant que paramètre régulé à l'origine (Cⱼ) ;
au moins un du groupe consistant en l'enregistrement (304) de l'évolution d'au moins un paramètre non régulé (Qᵢ), et l'exécution (312) de la méthode modifiée (410) est réalisé pendant une mise en oeuvre de gradient chromatographique.

4. Procédé selon l'une quelconque des revendications 1 à 3, dans lequel, pendant l'exécution (302) de la méthode d'exploration (400), la température, en particulier la température de sortie de colonne de séparation chromatographique, est mesurée et est utilisée en tant que paramètre régulé à l'origine.

5. Procédé selon l'une quelconque des revendications 1 à 4, comprenant au moins l'une des particularités suivantes :
l'évolution enregistrée du paramètre (Qᵢ) est fixée et stockée (306) en tant que jeu de données qui est directement utilisé pour ajuster (310) l'évolution du nouveau paramètre régulé pendant l'une quelconque des exécutions suivantes ;
l'évolution enregistrée du paramètre (Qᵢ) est utilisée pour la construction d'un programme d'exécution pour le nouveau paramètre régulé en traitant les données décrivant l'évolution enregistrée du paramètre (Qᵢ) de telle sorte que le jeu de données traité puisse être utilisé pour ajuster (310) l'évolution du nouveau paramètre régulé pendant l'une quelconque des exécutions suivantes aboutissant à une évolution fermée ou à la même évolution du nouveau paramètre régulé en tant qu'évolution du paramètre (Qᵢ) ;
l'évolution enregistrée du paramètre (Qᵢ) est utilisée pour la construction d'un programme d'exécution pour le nouveau paramètre régulé en traitant les données décrivant l'évolution enregistrée du paramètre (Qᵢ) de telle sorte que le jeu de données traité puisse être utilisé pour ajuster (310) l'évolution du nouveau paramètre régulé pendant l'une quelconque des exécutions suivantes aboutissant à une évolution fermée ou à la même évolution du nouveau paramètre régulé en tant qu'évolution du paramètre (Qᵢ), dans lequel le traitement de l'évolution enregistrée du paramètre (Qᵢ) comprend au moins un du groupe consistant en un changement de format de données, une décimation de données, une réduction de bruit, un ré-échantillonnage, un ajustement à une fonction mathématique, une correction d'erreur, une interpolation, une extrapolation, un lissage, et un filtrage de données.

6. Procédé selon l'une quelconque des revendications 1 à 5, comprenant au moins l'une des particularités suivantes :
l'évolution enregistrée est stockée (306) en tant que jeu de données qui est utilisé en tant que base pour le programme d'exécution pour la régulation directe du nouveau paramètre régulé (Qᵢ) ;
le programme d'exécution du nouveau paramètre régulé (Qᵢ) est stocké sur la base du jeu de données enregistré du paramètre non régulé à l'origine (Qᵢ).

7. Procédé selon l'une quelconque des revendications 1 à 6, dans lequel la méthode modifiée (410) est exécutée (312) sur un dispositif de chromatographie liquide (10') autre que le dispositif de chromatographie liquide (10) sur lequel est exécutée (302) la méthode d'exploration (400).

8. Procédé selon l'une quelconque des revendications 1 à 7, comprenant au moins l'une des particularités suivantes :
la méthode modifiée (410) est stockée pour être exécutée (312) sur un dispositif de chromatographie liquide/spectrométrie de masse (10', 60') ;
la définition (308) de la méthode modifiée (410) comprend au moins un du groupe consistant en l'ajout d'au moins une instruction à la méthode d'exploration (400), l'exclusion d'au moins une instruction issue de la méthode d'exploration (400), et la modification d'au moins une instruction de la méthode d'exploration (400) ;
la méthode modifiée (410) est stockée pour être exécutée (312) pour de multiples procédures de séparation d'échantillon sur un appareil de séparation d'échantillon (10) ;
la méthode modifiée (410) est stockée pour être ajustée (310) pour l'exécution suivante (312) ;
la méthode modifiée (410) est stockée dans un format que tous les paramètres régulés sont désormais définis en fonction du temps enregistré.

9. Appareil (210) de développement d'une méthode d'exploitation d'un dispositif de chromatographie liquide (10) destiné à séparer un échantillon fluidique à l'aide d'une phase mobile, dans lequel l'appareil (210) comprend :
une unité d'exécution (212) configurée pour exécuter (302) une méthode d'exploration (400) destinée à séparer un échantillon fluidique en régulant un jeu de paramètres régulés (*C*) pendant l'exécution de la méthode d'exploration (400), dans lequel des paramètres non régulés (*Q*) sont autorisés à varier librement pendant l'exécution de la méthode d'exploration (400) ;
une unité d'enregistrement (214) configurée pour enregistrer (304) une évolution d'au moins un paramètre non régulé (Qᵢ) pendant l'exécution de la méthode d'exploration (400), la dépendance au temps ou le développement de la valeur au cours du temps du paramètre non régulé (Qᵢ) étant détecté(e) et stocké(e) ;
une unité de définition (216) configurée pour définir (308) une méthode modifiée (410) pour séparer un échantillon fluidique obtenu à partir de la méthode d'exploration (400) en changeant (320) le jeu de paramètres régulés (*C*) et en déclarant (330) le paramètre non régulé (Qᵢ) préalablement enregistré en tant que nouveau paramètre régulé dans la méthode modifiée (410) ;
une unité d'exécution supplémentaire (218) configurée pour exécuter (312) la méthode modifiée (410) lors de l'application de l'évolution enregistrée du paramètre (Qᵢ) en tant que programme d'exécution pour ce paramètre (Qᵢ) dans le rôle de nouveau paramètre régulé ;
dans lequel un débit d'au moins une partie de la phase mobile fait partie du jeu de paramètres non régulés à l'origine (*Q*) ; et
dans lequel le débit est le nouveau paramètre régulé.
